Europäisches Patentamt

(19) European Patent Office

Office européen des brevets

(11) Numéro de publication: **0 056 555**
**B1**

(12) **FASCICULE DE BREVET EUROPEEN**

(45) Date de publication du fascicule du brevet:
16.05.84

(51) Int. Cl.³: **F 16 D 3/22, B 21 K 1/76**

(21) Numéro de dépôt: **81402086.3**

(22) Date de dépôt: **28.12.81**

(54) Joint universel de transmission, et procédé de fabrication d'un tel joint.

(30) Priorité: **02.01.81 FR 8100025**

(43) Date de publication de la demande:
**28.07.82 Bulletin 82/30**

(45) Mention de la délivrance du brevet:
**16.05.84 Bulletin 84/20**

(84) Etats contractants désignés:
**DE GB IT SE**

(56) Documents cités:
**EP - A - 0 022 872**
**FR - A - 1 355 447**
**FR - A - 2 131 627**
**FR - A - 2 205 140**
**FR - A - 2 375 487**
**FR - A - 2 411 996**

(73) Titulaire: **SOCIETE ANONYME AUTOMOBILES CITROEN, 117 à 167, Quai André Citroen, F-75747 Paris Cedex 15 (FR)**
Titulaire: **AUTOMOBILES PEUGEOT, 75, avenue de la Grande Armée, F-75116 Paris (FR)**

(72) Inventeur: **Dore, Jacques, 191, rue Saint-Denis, F-92700 Colombes (FR)**

(74) Mandataire: **Michardière, Bernard et al, Cabinet Plasseraud 84, rue d'Amsterdam, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Joint universel de transmission, et procédé de fabrication d'un tel joint

L'invention est relative à un joint universel de transmission du genre de ceux qui comprennent un élément extérieur, solidaire d'un premier arbre, présentant une cavité sphérique à l'intérieur de laquelle sont réalisées des rainures, un élément intérieur solidaire d'un deuxième arbre et présentant une surface sphérique extérieure sur laquelle sont également réalisées des rainures en nombre égal à celles de l'élément extérieur, la section du fond des rainures de l'élément intérieur par un plan passant par l'axe de cet élément étant formée par un arc de courbe, ledit élément intérieur étant placé dans l'élément extérieur, et des organes roulants tels que des billes étant disposés dans les logements formés par les couples de rainures de l'élément extérieur et de l'élément intérieur, ces organes roulants étant retenus dans les fenêtres d'une cage disposée entre l'élément intérieur et l'éléments extérieur, la surface extérieure (17) et la surface intérieure (16) de la cage (11) sont également sphériques et destinées à épouser les surfaces sphériques (3; 7, 14, 15) des éléments extérieur et intérieur.

Un tel joint universel est connu de EP-A-00 22 872. La réalisation du joint connu exige plusieurs opérations de forgeage.

L'invention a pour but, surtout, de rendre les joints universels du genre en question tels qu'ils soient d'une réalisation plus simple et plus économique, tout en assurant un bon fonctionnement.

Selon l'invention, un joint universel du genre défini précédemment est caractérisé par le fait que l'élément intérieur présente, sur sa surface extérieure, une portion de surface cylindrique située sensiblement dans la région médiane, selon la direction axiale, dudit élément, et s'étendant, suivant cette direction axiale, au moins sensiblement jusqu'au plan orthogonal à l'axe de l'élément intérieur contenant les points des fonds des rainures de cet élément les plus éloignés de l'axe.

Généralement, la section du fond des rainures de l'élément intérieur par un plan passant par l'axe de cet élément, est formée par un arc de cercle ayant son centre sur l'axe dudit élément, ce centre étant décalé par rapport à celui des portions de surface sphérique de la surface extérieure de cet élément; dans ce cas, la portion de surface cylindrique s'étend axialement au moins sensiblement jusqu'au plan orthogonal à l'axe de l'élément intérieur passant par le centre dudit arc de cercle.

L'invention concerne, également, un procédé pour réaliser l'élément intérieur d'un tel joint universel, ce procédé étant caractérisé par le fait que l'élément intérieur est obtenu par une seule opération de forgeage précis, par exemple à froid ou mi-chaud, avec deux matrices présentant un plan de joint unique orthogonal à la direction axiale de l'élément intérieur. Ce plan de joint est, de préférence, confondu avec le plan orthogonal à l'axe de l'élément intérieur qui contient les points des fonds des rainures les plus éloignés de l'axe.

On peut prévoir un traitement de cémentation et de trempe de l'élément intérieur, après le forgeage de cet élément.

Une opération finale de rectification de l'élément intérieur est généralement effectuée.

Un mode particulier de réalisation de l'invention sera plus explicitement décrit en détail avec référence au dessin ci-annexé.

La fig. 1, de ce dessin, est une coupe axiale d'un joint universel conforme à l'invention.

La fig. 2, enfin, illustre schématiquement un procédé de fabrication de l'élément intérieur du joint, cet élément étant représenté avec parties arrachées.

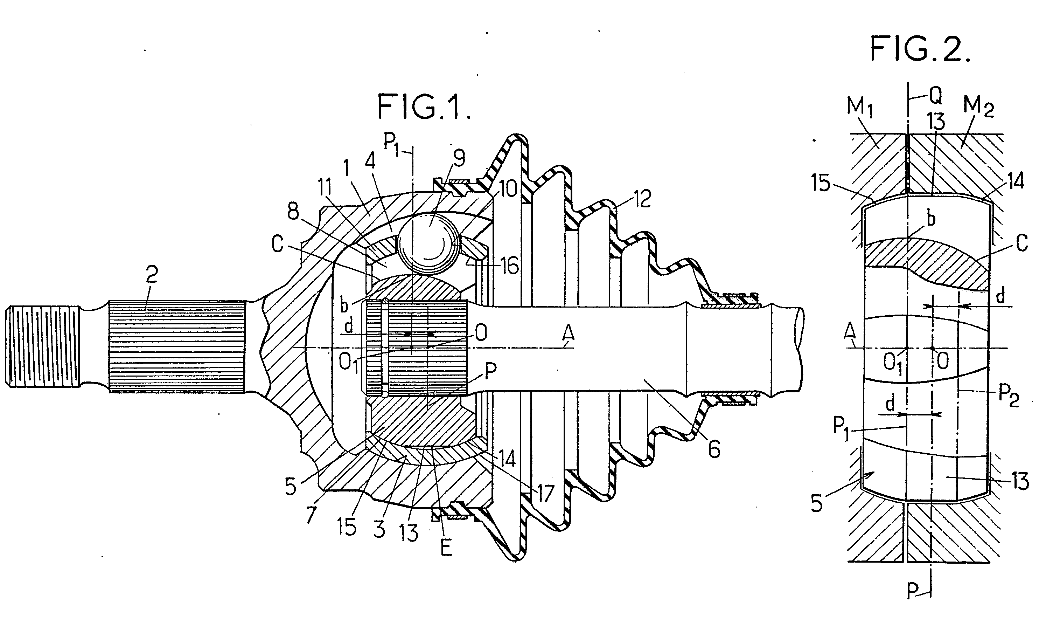

En se reportant au dessin, notamment à la fig. 1, on peut voir un joint universel de transmission comprenant un élément extérieur ou bol 1, solidaire d'un premier arbre 2 et présentant une cavité sphérique 3 de centro 0, dans laquelle sont réalisées des rainures ou gorges toriques 4.

Ce joint comprend également un élément intérieur ou noix 5, solidaire d'un deuxième arbre 6, présentant une surface externe 7 sur laquelle sont réalisées des rainures ou gorges 8 en nombre égal à celles de l'élément extérieur 1. Ces rainures 8 ont un plan de symétrie passant par l'axe de la noix 5.

Le joint universel comprend, enfin, des organes roulants, tels que des billes 9, disposés dans les logements formés par les couples de rainures 4, 8 de l'élément extérieur et de l'élément intérieur. Ces organes roulants 9 sont retenus dans les fenêtres 10 d'une cage 11, disposée entre l'élément intérieur 5 et l'élément extérieur 1. Une gaine d'étanchéité 12 est, en outre, prévue entre le bol 1 et le second arbre 6.

L'élément intérieur 5 présente, sur sa surface extérieure, une portion 13 de surface cylindrique située sensiblement dans la région médiane, selon la direction axiale, dudit élément. Cette portion 13 est de révolution autour de l'axe de l'élément 5; elle est prolongée, de part et d'autre suivant la direction axiale, par des portions de surface sphérique 14, 15, destinées à épouser la surface intérieure 16, également sphérique de la cage 11. Les portions de surface sphérique 14, 15 ont leur centre confondu avec celui de la surface intérieure 16 de la cage 11 lorsque la cage est montée sur cet élément 5. Ce centre est situé sur l'axe de l'élément 5.

La surface extérieure 17 de la cage 11 est également sphérique, de même centre que la surface intérieure 16; lorsque l'ensemble du joint est monté, les centres de la surface 17, de la surface 16 et des portions 14 et 15 sont confondus avec le centre 0 de la cavité sphérique 3.

La section du fond de chaque rainure 8 par un plan passant par l'axe A est formée par un arc de courbe, tournant sa convexité vers l'extérieur.

Les bords des rainures 8, à la périphérie de l'élément 5, sont également curvilignes, comme visible sur la fig. 2.

Plus précisément, chaque rainure 8 est torique; la section du fond d'une rainure 8 par un plan de symétrie passant par l'axe A de l'élément 5 est un arc de cercle C ayant son centre $O_1$ situé sur l'axe de l'élément 5, ce centre $O_1$ étant décalé d'une distance d par rapport au centre 0 des portions de surface sphérique 14, 15. Les points tels que b des fonds des rainures 8 les plus éloignés de l'axe de l'élément 5 sont situés à l'intersection de l'arc de cercle C et du plan $P_1$ passant par le centre $O_1$ et orthogonal à l'axe de l'élément 5.

La portion de surface cylindrique 13 s'étend axialement jusqu'à ce plan $P_1$, d'un premier côté du plan P passant par le centre 0 et orthogonal à l'axe de l'élément 5. La portion de surface cylindrique 13 s'étend symétriquement de l'autre côté du plan P, jusqu'au plan $P_2$ (fig. 2) situé à une distance d du plan P. La longueur axiale de la surface cylindrique 13 est donc égale ou sensiblement égale à 2d.

Lorsque le montage de la noix (ou élément) 5 à l'intérieur de la cage 11 a été réalisé, des espaces E (fig. 1) sont formés entre la portion de surface cylindrique 13 et la surface intérieure 16 de la cage. Ces espaces E constituent des réserves de lubrifiant et permettent d'assurer une bonne lubrification entre l'élément 5 et la cage 11, et donc un bon fonctionnement du joint.

L'élément intérieur 5 peut être réalisé par une seule opération de forgeage précis, par exemple à froid ou à mi-chaud (lors d'un forgeage à mi-chaud, la pièce à forger est amenée à une température de l'ordre de 700°C à 800°C). Le forgeage est assuré au moyen de deux matrices simples M1, M2, schématiquement représentées sur la fig. 2 et qui s'appliquent l'une contre l'autre suivant un plan de joint unique Q orthogonal à la direction axiale de l'élément 5 et situé dans la zone de la portion de surface cylindrique 13; de préférence, le plan Q passe par le centre $O_1$ et est donc confondu avec le plan $P_1$. Les empreintes des matrices correspondent aux formes complémentaires de celles de parties à réaliser de l'élément intérieur 5.

Il est à noter qu'un tel procédé de fabrication est possible grâce à la présence de la portion de surface cylindrique 13. En effet, cette surface 13 constitue le lieu des points de la surface extérieure de l'élément 5 les plus éloignés de l'axe de cet élément. En adoptant un plan de joint Q confondu avec le plan $P_1$, il est possible d'extraire la noix 5 des deux matrices puisque ce plan passe également par les points b, des fonds de rainures 8, les plus éloignés dudit axe.

Il n'en serait pas de même si la surface extérieure de l'élément 5 était formée par une portion de surface sphérique continue, de la zone 14 à la zone 15; dans ce cas, en effet, les points de cette surface les plus éloignés de l'axe de l'élément 5 seraient situés dans le plan P; la ligne de joint de matrice pour le forgeage d'un tel élément, devrait passer alternativement du plan P au plan $P_1$, ce qui nécessiterait des matrices présentant des dents et qui seraient beaucoup plus compliquées et plus coûteuses que dans le cas de l'invention.

L'élément intérieur 5 de l'invention obtenu par forgeage présente une surépaisseur de matière d'environ $3/_{10}$ème de millimètre sur les rainures ou pistes 8 et sur sa surface extérieure. Cette surépaisseur est enlevée, après un traitement classique de cémentation et de trempe, par rectification. L'importance de la portion cylindrique 13 est ainsi amenuisée et son existence dans la région médiane de la noix 5 ne nuit pas au centrage de la noix dans la cage 11; ce centrage est réalisé par les portions de surface sphérique 14, 15 qui coopèrent avec la surface intérieure 16 de la cage.

Une telle solution ne nécessite aucune opération d'usinage supplémentaire. Il n'en serait pas de même dans le cas d'une réalisation par forgeage précis, par l'utilisation de deux matrices à extrémités planes, mais dont le plan de joint serait confondu avec le plan P.

La surface extérieure de l'élément 5 présenterait alors une surépaisseur locale qu'il serait nécessaire de supprimer par une opération de tournage avant les opérations de cémentation et de trempe, afin que l'épaisseur du traitement soit maintenue sur toute la surface extérieure.

Il est à noter que la dépouille nécessaire à la sortie des matrices, notamment pour la matrice M2 forgeant la portion cylindrique 13, est très faible; cette dépouille disparaîtra lors de la rectification.

L'élément intérieur 5 de l'invention peut donc être facilement réalisé par forgeage précis. Il en résulte un gain de matière sensible par rapport au procédé classique d'usinage par enlèvement de matière, et donc une économie.

La réserve de graisse de lubrification formée par les espaces E permet d'éviter les grippages.

## Revendications

1. Joint universel de transmission, comprenant un élément extérieur (1), solidaire d'un premier arbre (2), présentant une cavité sphérique (3) à l'intérieur de laquelle sont réalisées des rainures (4), un élément intérieur (5) solidaire d'un deuxième arbre (6) et présentant une surface sphérique extérieure (7, 14, 15) sur laquelle sont également réalisées des rainures (8) en nombre égal à celles de l'élément extérieur, la section du fond des rainures de l'élément intérieur par un plan passant par l'axe de cet élément étant formée par un arc de courbe (C), ledit élément intérieur étant placé dans l'élément extérieur, et des organes roulants tels que des billes (9) étant disposés dans les logements formés par les couples de rainures de l'élément extérieur et de l'élément intérieur, ces organes roulants étant retenus dans les fenêtres (10) d'une cage (11) disposée entre l'élément intérieur et l'élément extérieur la surface extérieure (17) et la surface intérieure

(16) de la cage (11) sont également sphériques et destinées à épouser les surfaces sphériques (3; 7, 14, 15) des éléments extérieur et intérieur, caractérisé par le fait que l'élément intérieur (5) présente, sur sa surface sphérique extérieure, une portion (13) de surface cylindrique située sensiblement dans la région médiane selon la direction axiale dudit élément, et s'étendant, suivant cette direction axiale, au moins sensiblement jusqu'au plan (P1) orthogonal à l'axe de l'élément intérieur contenant les points (b) des fonds des rainures (8) de cet élément les plus éloignés de l'axe.

2. Joint universel selon la revendication 1, dans lequel la section du fond des rainures de l'élément intérieur (5) par un plan passant par l'axe de cet élément est formée par un arc de cercle (C) ayant son centre $(0_1)$ sur l'axe (A) dudit élément, ce centre étant décalé par rapport à celui (0) des portions (14, 15) de surface sphérique de la surface extérieure (7) de l'élément (5), caractérisé par le fait que la portion (13) de surface cylindrique s'étend axialement au moins sensiblement jusqu'au plan orthogonal $(P_1)$ à l'axe de l'élément intérieur (5) passant par le centre $(0_1)$ dudit arc de cercle.

3. Joint universel selon l'une quelconque des revendications précédentes, caractérisé par le fait que la portion (13) de surface cylindrique s'étend axialement de part et d'autre du plan orthogonal à l'axe de l'élément intérieur (5) et passant par le centre (0) des portions de surface sphérique (14, 15).

4. Joint universel selon l'ensemble des revendications 2 et 3, caractérisé par le fait que la portion (13) de surface cylindrique a une longueur axiale égale ou sensiblement égale à deux fois la distance (d) séparant le centre $(0_1)$ des sections en arc de cercle (C) des fonds des rainures (8) du centre (0) des portions de surface sphérique (14, 15).

5. Joint universel selon l'une quelconque des revendications précédentes, caractérisé par le fait que des espaces (E) sont formés entre la portion de surface cylindrique (13) et la surface intérieure (16) de la cage (11).

6. Procédé de fabrication de l'élément intérieur d'un joint universel selon l'une quelconque des revendications précédentes, caractérisé par le fait que l'élément intérieur (5) est obtenu, par une seule opération de forgeage précis, notamment à froid ou mi-chaud, avec deux matrices $(M_1, M_2)$ présentant un plan de joint unique (Q) orthogonal à la direction axiale de l'élément intérieur.

7. Procédé selon la revendication 6, caractérisé par le fait qu'on fait subir un traitement de cémentation et de trempe à l'élément intérieur (5) après le forgeage de cet élément.

8. Procédé selon la revendication 7, caractérisé par le fait qu'on fait subir une opération finale de rectification à l'élément intérieur (5).

**Patentansprüche**

1. Antriebskreuzgelenk

— mit einem mit einer ersten Welle (2) fest verbundenen äußeren Element (1) mit einem sphärischen Hohlraum (3), in dessen Innern Nuten (4) angebracht sind,

— mit einem in dem äußeren Element (1) angeordneten, mit einer zweiten Welle (6) fest verbundenen inneren Element (5) mit einer sphärischen äußeren Oberfläche (7, 14, 15), auf welcher ebenfalls Nuten (8) vorgesehen sind, deren Zahl der Zahl der Nuten des äußeren Elementes entspricht und deren Bodenquerschnitt in einer durch die Achse dieses inneren Elementes verlaufenden Ebene von einem Kurvenbogen (C) gebildet ist,

— sowie mit Wälzkörpern (z. B. Kugeln 9), die in den Aufnahmen angeordnet sind, welche von den jeweils eine Nut des äußeren Elementes und eine Nut des inneren Elementes umfassenden Nutenpaaren gebildet sind, wobei die Wälzkörper in den Fenstern (10) eines zwischen dem inneren Element und dem äußeren Element angeordneten Käfigs (11) gehalten sind, dessen äußere Oberfläche (17) und innere Oberfläche (16) ebenfalls sphärisch sind, derart daß sie sich an die sphärischen Oberflächen (3; 7, 14, 15) des äußeren bzw. inneren Elementes anschmiegen,

dadurch gekennzeichnet, daß das innere Element (5) auf seiner äußeren sphärischen Oberfläche einen zylindrischen Oberflächenbereich (13) aufweist, der sich annähernd in der bezüglich der Richtung der Achse des Elementes in der mittleren Region desselben befindet und der sich längs dieser axialen Richtung zumindest annähernd bis zu der Ebene (P1) erstreckt, die senkrecht zur Achse des inneren Elementes verläuft und diejenigen Punkte (b) der Böden der Nuten (8) dieses Elementes enthält, die von der Achse am weitesten entfernt sind.

2. Kreuzgelenk nach Anspruch 1, bei welchem der Bodenquerschnitt der Nuten des inneren Elementes (5) in einer durch die Achse dieses Elementes verlaufenden Ebene von einem Kreisbogen (C) gebildet ist, dessen Zentrum $(O_1)$ auf der Achse (A) des genannten Elementes liegt und gegenüber dem Zentrum (O) der sphärischen Oberflächenbereiche (14, 15) der äußeren Oberfläche (7) des Elementes (5) versetzt ist, dadurch gekennzeichnet, daß der zylindrische Oberflächenbereich (13) sich axial zumindest annähernd bis zu der Ebene $(P_1)$ erstreckt, die senkrecht zur Achse des inneren Elementes (5) verläuft und das Zentrum $(O_1)$ des genannten Kreisbogens enthält.

3. Kreuzgelenk nach einem der vorhergehenden Ansprüche, dadurch gekennzeichnet, daß der zylindrische Oberflächenbereich (13) sich in axialer Richtung beidseitig der Ebene erstreckt, die senkrecht zur Achse des inneren Elementes (5) verläuft und das Zentrum (O$_1$) der sphärischen Oberflächenbereiche (14, 15) enthält.

4. Kreuzgelenk nach Anspruch 2 und 3, dadurch gekennzeichnet, daß der zylindrische Oberflächenbereich (13) eine axiale Länge besitzt, die gleich oder annähernd gleich ist dem doppelten Abstand (d) zwischen dem Zentrum (O$_1$) der kreisbogenförmigen Abschnitte (C) der Böden der Nuten (8) und dem Zentrum (O) der sphärischen Oberflächenbereiche (14, 15).

5. Kreuzgelenk nach einem der vorhergehenden Ansprüche, dadurch gekennzeichnet, daß zwischen dem zylindrischen Oberflächenbereich (13) und der inneren Oberfläche (16) des Käfigs (11) Zwischenräume (E) gebildet sind.

6. Verfahren zur Herstellung des inneren Elementes eines Kreuzgelenks nach einem der vorhergehenden Ansprüche, dadurch gekennzeichnet, daß das innere Element (5) durch einen einzigen Präzisionsschmiedevorgang, insbesondere durch Kalt- oder Halbwarmschmieden, mit zwei Matritzen (M$_1$, M$_2$) gebildet wird, die eine einzige senkrecht zur axialen Richtung des inneren Elementes verlaufende Formtrennungsfläche (Q) besitzen.

7. Verfahren nach Anspruch 6, dadurch gekennzeichnet, daß das innere Element (5) nach dem Schmieden einer Härtungs- und Abschreckbehandlung unterzogen wird.

8. Verfahren nach Anspruch 7, dadurch gekennzeichnet, daß das innere Element (5) einer Endbehandlung durch Schleifen unterzogen wird.

## Claims

1. A universal transmission joint, comprising an outer element (1) integral with a first shaft (2) having a spherical cavity (3), the inside of which is formed with grooves or slots (4), an inner element(5) integral with a second shaft (6) and having an outer spherical surface (7, 14, 15), also formed with grooves or slots (8) of a number equal to the number thereof in the outer element, the section of the base of the grooves or slots of the inner element through a plane passing through the axis of said element being formed by an arc of a curve (C), the said inner element being disposed in the outer element, and rolling means such as balls (9) being disposed in the housings formed by the pairs of grooves or slots in the outer element and the inner element, said rolling means being retained in windows (10) of a cage (11) disposed between the inner and outer elements, the outer surface (17) and the inner surface (16) of the cage (11) are also spherical and adapted to match the spherical surfaces (3; 7, 14, 15) of the outer and inner elements, characterized in that the inner element (5) has on its outer spherical surface a cylindrical surface portion (13) situated substantially in the median region in the axial direction of said element and extending, in said axial direction, at least substantially as far as the plane (P1) at right angles to the axis of the inner element containing the points (b) of the bases of the grooves or slots (8) of said element farthest away from the axis.

2. A universal joint according to claim 1, in which the section of the base of the grooves or slots of the inner element (15) through a plane passing through the axis of said element is formed by an arc of a circle (C) having its centre (O$_1$) on the axis (A) of said element, said centre being offset from that (O) of the spherical surface portions (14, 15) of the outer surface (7) of the element (5), characterized in that the cylindrical surface portion (13) extends axially at least substantially as far as the plane (P$_1$) at right angles to the axis of the inner element (5) passing through the centre (O$_1$) of said arc of a circle.

3. A universal joint according to claim 1 or 2, characterized in that the cylindrical surface portion (13) extends axially on either side of the plane at right angles to the axis of the inner element (5) and passing through the centre (O) of the spherical surface portions (14, 15).

4. A universal joint according to claims 2 and 3, characterized in that the cylindrical surface portion (13) has an axial length equal or substantially equal to twice the distance (d) between the centre (O$_1$) of the arcuate sections (C) of the bases of the grooves or slots (8) and the centre (O) of the spherical surface portions (14, 15).

5. A universal joint according to any one of the preceding claims, characterized in that spaces (E) are formed between the cylindrical surface portion (13) and the inner surface (16) of the cage (11).

6. A method of producing the inner element of a universal joint according to any one of the preceding claims, characterized in that the inner element (5) is produced in a single accurate forging operation, more particularly in the cold or semi-hot state, with two dies (M$_1$, M$_2$) having a single joint plane (Q) at right angles to the axial direction of the inner element.

7. A method according to claim 6, characterized in that the inner element (5) ist subjected to cementation and hardening after forging.

8. A method according to claim 7, characterized in that the inner element (5) is subjected to a final grinding operation.

FIG.1.

FIG.2.

0 056 555